# EUROPEAN PATENT APPLICATION

(11) **EP 2 584 784 A1**
(43) Date of publication of application: **24.04.2013**
(21) Application number: 11795582.3
(22) Date of filing: 03.06.2011
(51) Int. Cl.: H04N 13/00, H04N 7/173

(54) **SIGNAL TRANSMISSION METHOD, SIGNAL TRANSMISSION DEVICE, AND SIGNAL RECEPTION DEVICE**

(30) Priority: 16.06.2010 JP 2010136901
(71) Applicant: Sony Corporation, Tokyo 108-0075 (JP)
(72) Inventor: KITAZATO, Naohisa, Tokyo 108-0075 (JP)
(74) Representative: Ealey, Douglas Ralph
(86) International application number: PCT/JP2011/062852
(87) International publication number: WO 2011/158674

(57) **Abstract**

A process of a 3D compatible terminal to which content is distributed is made convenient.

Meta information and a control signal are transmitted together with content transmitted from a content server 10 in a predetermined transmission mode. The meta information includes information indicating whether the entirety of the content is 3D or a part thereof is 3D, information indicating whether this starts with 2D or 3D when a part thereof is 3D, and identification information of a 3D transmission method when the content is 3D. The control signal includes a signal for identifying 2D and 3D, that is, switching information regarding switching timing between 2D and 3D. An encoding unit 154 encodes the content stored in a content storage unit 151, the meta information generated by a meta information generating unit 152, and the control signal generated by a control signal generating unit 153 in a predetermined encoding system. The meta information is inserted into a meta file or an MP4 container, for example, to be transmitted.

## Description

### TECHNICAL FIELD

The invention relates to a signal transmitting method, a signal transmitting device, and a signal receiving device, and particularly to a signal transmitting method of distributing content through a network and the like.

### BACKGROUND ART

Distribution of 3D content through the network is studied. The entirety of the 3D content is not always created by 3D signals. The 3D signals might be partially used. This is because a viewer gets tired and creation of the content is expensive if the entirety of the content is 3D in a case of a lengthy content, and video in which 3D expression is effective is limited.

A policy may be that the content for a 3D compatible terminal and that for a non-3D compatible terminal are separately made and after confirmation in advance whether the terminal supports 3D or not, the content including 3D is supplied to the former and 2D content is supplied to the latter. Even when a user of the 3D compatible terminal views a 3D program, the user does not necessarily want to view the same in 3D. Therefore, it is required that the user may select to switch 2D viewing and 3D viewing in the 3D compatible terminal. In this case, it is also desirable that image quality of the 2D viewing is equivalent to that of a normal 2D content.

In a case of the content in which 2D and 3D are switched, it is required to consider that the terminal cannot switch in real time and significant time might be required. Herein, the fact that the significant time is required is intended to mean that the viewer realizes the switch.

For example, Patent Documents 1 and 2 disclose technology to allow a 3D compatible receiver to switch between 2D and 3D to display.

### CITATION LIST

### PATENT DOCUMENTS

Patent Document 1: Japanese Patent Application Laid-Open No. 2005-6114
Patent Document 2: Japanese Patent Application Laid-Open No. 2007-13994

### SUMMARY OF THE INVENTION

### PROBLEMS TO BE SOLVED BY THE INVENTION

In the case of the 3D compatible terminal, it is convenient to get information indicating whether the entirety of a distributed 3D content is a 3D (stereoscopic) image display section or a part thereof is the 3D image display section and indicating whether the content starts with a 3D image display section or a 2D (two-dimensional) image display section when a part thereof is the 3D image display section before reproduction of the content.

The 3D compatible terminal may shorten time required for reproducing and displaying the 3D content by preparing a processing state suited to a start of the 3D content in advance. If it is known that the entirety of the distributed 3D content is the 3D image display section, it is not required to monitor the switch between the 2D image display section and the 3D image display section thereafter and a processing load decreases. Also, if it is known that a part of the distributed 3D content is the 3D image display section, it is possible to prepare the processing state to monitor the switch between the 2D image display section and the 3D image display section in advance.

An object of the invention is to make the process of the 3D compatible terminal to which the content is distributed convenient.

### SOLUTION TO PROBLEM

A concept of the invention is a signal transmitting method, including: when a stereoscopic image display section for displaying a stereoscopic image is included in at least a part of content distributed through a network, transmitting content information, together with the content, indicating whether the entirety of the content is the stereoscopic image display section or a part of the content is the stereoscopic image display section and further indicating whether a starting display section is the stereoscopic image display section or a two-dimensional image display section when a part of the content is the stereoscopic image display section.

In this invention, the content is distributed through the network. The stereoscopic image display section for displaying the stereoscopic image is included in at least a part of the content. The content information is transmitted together with the content. The content information is the information indicating whether the entirety of the content is the stereoscopic image display section or a part thereof is the stereoscopic image display section and further indicating whether the starting display section is the stereoscopic image display section or the two-dimensional image display section when a part of the content is the stereoscopic image display section.

For example, the content information is described in information distributed before reproduction of the content to be transmitted. Also, for example, the content information is described in the content to be transmitted. Herein, when the content is transmitted in an MP4 container, the content information is described in a moov container to be transmitted.

In this manner, in this invention, the content information indicating whether the entirety of the content is the 3D (stereoscopic) image display section or a part thereof is the 3D image display section and further indicating whether the starting display section is the 3D image display section or the 2D (two-dimensional) image display section when a part of the content is the 3D image display section is transmitted together with the content. Therefore, the 3D compatible terminal may easily get the information indicating whether the entirety of the distributed content is the 3D image display section or a part thereof is the 3D image display section and indicating whether this starts with the 3D image display section or the 2D image display section when a part thereof is the 3D image display section before the reproduction of the content by the content information.

Also, in this invention, it is also possible that switching information regarding switching timing between the stereoscopic image display section and the two-dimensional image display section is transmitted together with the content when a part of the content is the stereoscopic image display section, for example. In this case, it is also possible to describe the switching information in the content to transmit, for example. In this case, the 3D compatible terminal may more easily know the switching timing between the 3D image display section and the 2D image display section of the content by the switching information transmitted together with the content.

Also, another concept of this invention is a signal receiving device, including: a receiving unit which receives, through a network, content in at least a part of which a stereoscopic image display section for displaying a stereoscopic image is included and content information indicating whether the entirety of the content is the stereoscopic image display section or a part of the content is the stereoscopic image display section and further indicating whether a starting display section is the stereoscopic image display section or a two-dimensional image display section when a part of the content is the stereoscopic image display section; a content processing unit which processes the content received by the receiving unit to obtain a displayed image; and a controller which controls the content processing unit based on the content information received by the receiving unit before the content processing unit starts the process of the content.

In this invention, the receiving unit receives the content and the content information. The content information is the information indicating whether the entirety of the content is the 3D (stereoscopic) image display section or a part thereof is the 3D image display section and further indicating whether the starting display section is the 3D image display section or the 2D (two-dimensional) image display section when a part of the content is the 3D image display section.

The content processing unit performs a reproduction process to the content received by the receiving unit. Displayed image data is obtained by the reproducing process. In this case, left-eye image data and right-eye image data, which compose 3D image data, may be obtained in the 3D image display section of the content. Also, 2D image data may be obtained in the two-dimensional image display section.

The controller controls the content processing unit based on the content information received by the receiving unit. In this case, the controller may know whether the entirety of the content is the 3D image display section or a part thereof is the 3D image display section and whether this starts with the 3D image display section or the 2D image display section when a part thereof is the 3D image display section by the content information. Therefore, for example, the content processing unit is controlled to be in the processing state suited to the start of the content before the reproduction of the content.

In this manner, in this invention, the content information indicating whether the entirety of the content is the 3D image display section or a part thereof is the 3D image display section and further indicating whether the starting display section is the 3D image display section or the 2D image display section when a part of the content is the 3D image display section is received together with the content and the content processing unit is controlled based on the content information. Therefore, it is possible to control the content processing unit to be in the processing state suited to the start of the content before the reproduction of the content, thereby shortening the time required for reproducing and displaying the content, for example.

### EFFECTS OF THE INVENTION

According to the invention, the content information indicating whether the entirety of the content is the 3D (stereoscopic) image display section or a part thereof is the 3D image display section and further indicating whether the starting display section is the 3D image display section or the 2D (two-dimensional) image display section when a part of the content is the 3D image display section is transmitted together with the content, and the process of the 3D compatible terminal to which the content is distributed may be made convenient.

### BRIEF DESCRIPTION OF DRAWINGS

Fig. 1 is a view schematically illustrating a transmission mode (type 1) of 3D content.
Fig. 2 is a view schematically illustrating the transmission mode (type 2) of the 3D content.
Fig. 3 is a view schematically illustrating the transmission mode (type 3) of the 3D content.
Fig. 4 is a view schematically illustrating the transmission mode (type 4) of the 3D content.
Fig. 5 is a view for illustrating a first example of inserting meta information into a meta file.
Fig. 6 is a view illustrating a description example of the meta information in a case in which the meta information is inserted into the meta file.
Fig. 7 is a view for illustrating a second example of inserting the meta information into an MP4 container.
Fig. 8 is a view illustrating the description example of the meta information in a case in which the meta information is inserted into the MP4 container.
Fig. 9 is a view illustrating an example of inserting a control signal into a header of each unit composing an MPEG-4 AVC video data stream.
Fig. 10 is a view schematically illustrating a file configuration example of a content server in the transmission mode (type 1) of the 3D content.
Fig. 11 is a view schematically illustrating the file configuration example of the content server in the transmission mode (type 2) of the 3D content.
Fig. 12 is a view schematically illustrating the file configuration example of the content server in the transmission mode (type 3) of the 3D content.
Fig. 13 is a view schematically illustrating the file configuration example of the content server in the transmission mode (type 4) of the 3D content.
Fig. 14 is a block diagram illustrating a configuration example of the content server.
Fig. 15 is a block diagram illustrating a configuration example of a receiver (3D compatible terminal).
Fig. 16 is a flowchart for illustrating operation of the receiver.
Fig. 17 is a flowchart for illustrating the operation of the receiver.
Fig. 18 is a view for illustrating a process at the time of simultaneous switch.

### MODE FOR CARRYING OUT THE INVENTION

A mode for carrying out the invention (hereinafter referred to as an "embodiment") is hereinafter described. Meanwhile, it is described in following order.

### 1. Embodiment

### 2. Variation

### <1. Embodiment>

### [Transmission Mode of Content]

In this embodiment, content is distributed from a content server such as an Internet protocol television (IPTV) server through a network such as the Internet to a 3D compatible terminal (receiver). Transmission modes (types 1 to 4) of the content supposed in this embodiment are first described.

### [Regarding Type 1]

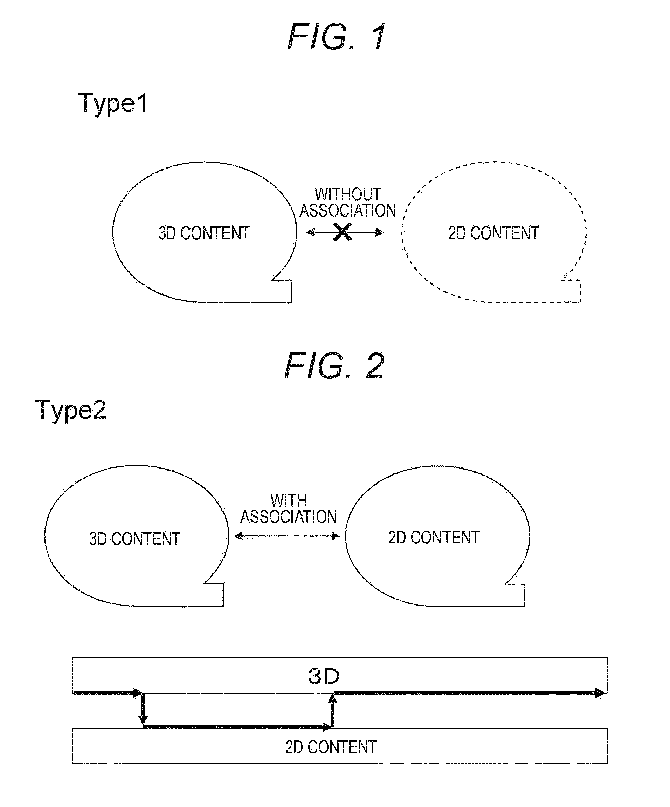

First, the "type 1" is described. Fig. 1 schematically illustrates the "type 1" transmission mode. In the "type 1", 3D content includes one file including only a 3D stream. There is no 2D content, or if the 2D content is present, this is prepared as another content without direct association.

The "type 1" is a basic state of the 3D content. Since the entirety is the 3D stream, it is not required to embed a control signal indicating 2D and 3D in the stream and it is not required that the 3D compatible terminal monitor the control signal. However, if the entirety of the content is created in 3D, flexibility decreases and a creating cost increases.

In the "type 1", in a case in which a non-scalable 3D method is applied as a transmission method, when the 3D compatible terminal generates 2D video from the 3D stream, this generates the 2D video by using only a half of image data of the stream, so that image quality is deteriorated. The non-scalable 3D method includes a side by side (SBS) format, a top & bottom format and the like.

In the "type 1", in a case in which a scalable 3D method is applied as the transmission method, the 2D video may be seamlessly viewed in the 3D compatible terminal without deterioration in image quality. The scalable 3D method includes a multi view coding (MVC) format and the like.

### [Regarding Type 2]

Next, the "type 2" is described. Fig. 2 schematically illustrates the "type 2" transmission mode. The "type 2" is the transmission mode supposed to be applied in the case of the non-scalable 3D method. In the "type 2", the 3D content includes one file including only the 3D stream. This is the transmission mode, which enables a switch from 3D to 2D by 2D content (simultaneous 2D content) associated with the 3D content.

As in the case of the "type 1", in the "type 2", the flexibility decreases and the creating cost increases when the entirety of the content is created in 3D. Unlike in the case of the "type 1", however, in the "type 2", it is possible to provide a service with original image quality also when it is switched from 3D to 2D in the 3D compatible terminal also in the case of the non-scalable 3D method by using the simultaneous 2D content. However, information of pairing of the 3D content and the simultaneous 2D content is required and operation and implementation become complicated in association with the same.

### [Regarding Type 3]

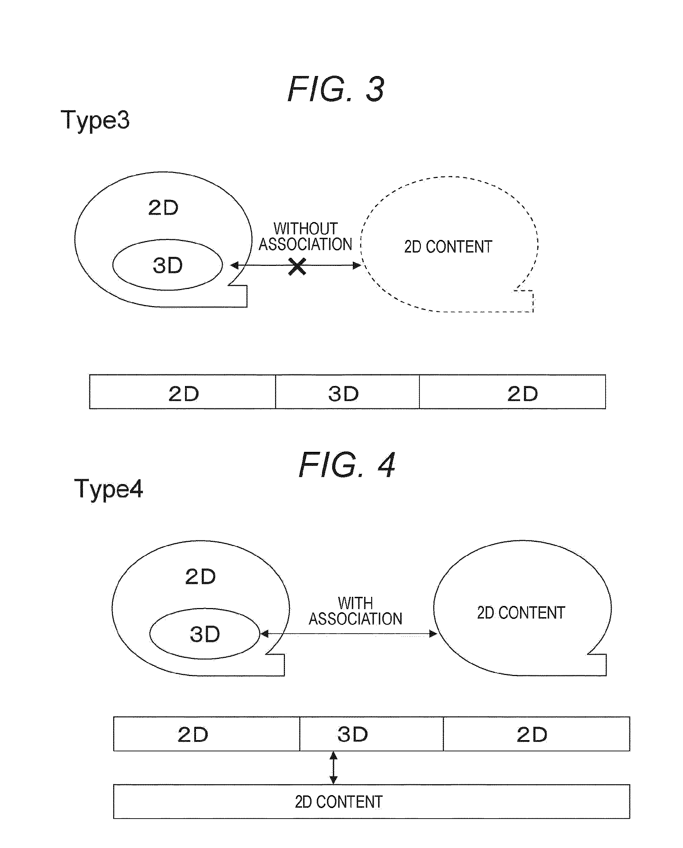

Next, the "type 3" is described. Fig. 3 schematically illustrates the "type 3" transmission mode. In the "type 3", a part of the content is a 3D image display section. That is, in the "type 3", one content includes the 3D image display section and a 2D image display section.

In the "type 3", it is required to embed the control signal for identifying the 2D stream and the 3D stream in the stream and the 3D compatible terminal is required to monitor the control signal to switch between 2D reproduction and 3D reproduction.

Also, in the "type 3", in the case in which the non-scalable 3D method is applied, the 3D compatible terminal generates the 2D video by using only a half of the stream when the 2D image is viewed in the 3D image display section, so that the image quality is deteriorated. Also, in the "type 3", in the case of the scalable 3D method, the 2D video may be seamlessly viewed in the 3D compatible terminal without the deterioration in image quality.

### [Regarding Type 4]

Next, the "type 4" is described. Fig. 4 schematically illustrates the "type 4" transmission mode. The "type 4" is the transmission mode supposed to be applied in the case of the non-scalable 3D method. In the "type 4", the simultaneous 2D content is added to the "type 3", so that the 2D image may be viewed in the 3D image display section without the deterioration in image quality in the 3D compatible terminal.

In the "type 4", the 3D compatible terminal basically uses a partially 3D content when the 3D video is viewed. Also, in the "type 4", when the 2D image is viewed, the simultaneous 2D content is used also in a 3D non-compatible terminal. Also, when it is switched from the 3D video to the 2D video in the "type 4", the 3D compatible terminal uses the simultaneous 2D content.

### [Meta Information, Control Signal]

In this embodiment, meta information and the control signal regarding 3D are also transmitted along with the transmission of the content from the content server in the above-described transmission modes. The meta information and control signal are used by a receiving side to deal with the above-described "type 1 to type 4" transmission modes. The meta information and control signal are described.

### [Meta Information]

The meta information is information regarding the entirety of the content. The meta information includes information indicating whether the entirety of the content is 3D or a part thereof is 3D. When a part of the content is 3D, the meta information also includes information indicating whether this starts with 2D or 3D. The meta information also includes information for identifying the 3D transmission method when the content is 3D. The 3D transmission method includes the side by side format, the top & bottom format, a frame sequential format, the multi view coding (MVC) and the like.

The meta information also includes information indicating whether the content includes the simultaneous 2D content when the content is 3D. Meanwhile, there is a case in which the simultaneous 2D content is not present in the same folder as the 3D content in the content server, which distributes the content. In this case, the meta information also includes an URL (uniform resource locator) of a distributor of the simultaneous 2D content.

### [Control Signal]

The control signal is a signal for directly controlling a video stream and an audio stream (AV stream). The control signal includes a signal for identifying 2D and 3D when a part of the content is 3D. An identifying signal is switching information regarding switching timing between 2D and 3D.

### [Insertion Positions of Meta Information and Control Signal]

Insertion positions of the meta information and control signal are described. First, the insertion position of the meta information is described. The meta information is inserted into a meta file, for example (first method). The meta information is also inserted into an MP4 container, for example (second method). The control signal is inserted into a header of each access unit, which composes an MPEG-4 AVC video data stream.

### [Insertion Position of Meta Information (First Example)]

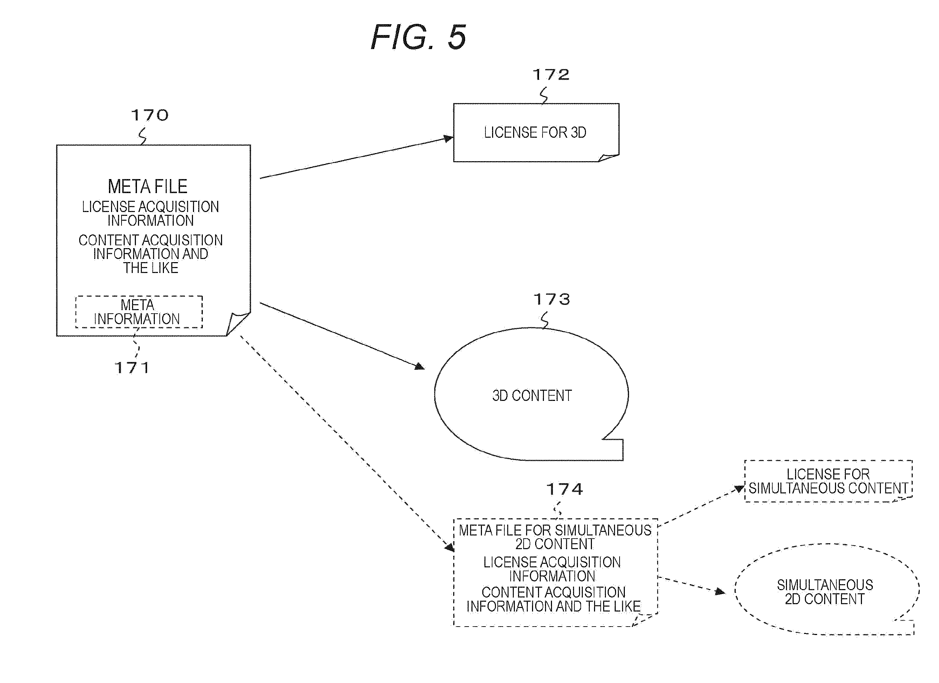

Fig. 5 is an illustrative view of a first example of the insertion position of the meta information. In this example, meta information 171 in which the meta information is described is inserted into a meta file 170 including license acquisition information for reproducing the content, content acquisition information and the like. In this case, the receiver acquires the license acquisition information from the meta file 170 to acquire a license for reproducing the 3D content. Also, in this case, the receiver acquires the content acquisition information from the meta file 170 to acquire the 3D content.

Meanwhile, there is a case in which the receiver acquires a meta file 174 including the license acquisition information for reproducing the simultaneous 2D content and the content acquisition information by the acquisition information included in the meta file 170. In this case, the receiver acquires the license acquisition information from the meta file 174 to acquire the license for reproducing the simultaneous 2D content and acquires the content acquisition information from the meta file 174 to acquire the simultaneous 2D content.

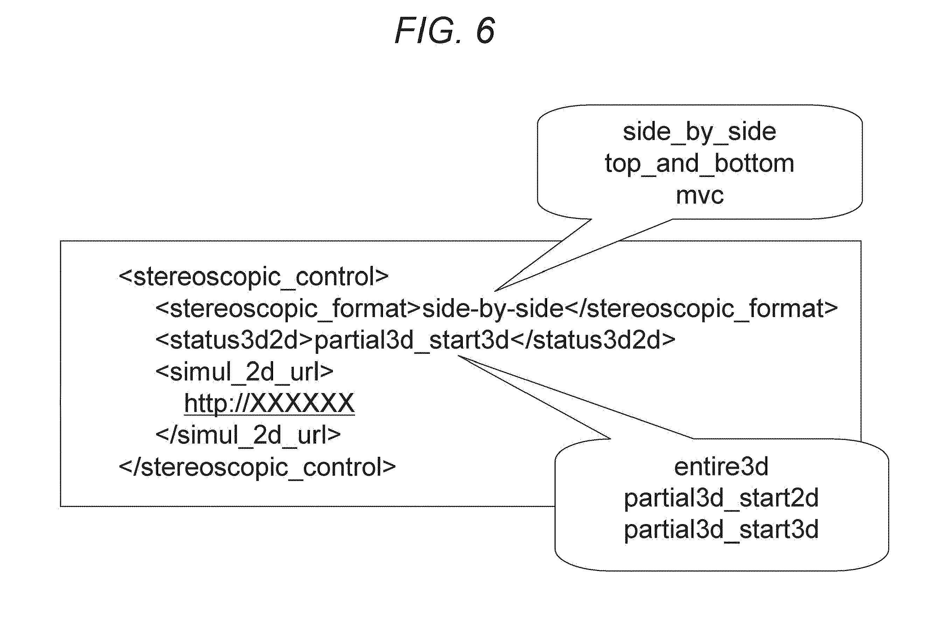

Fig. 6 illustrates a description example of the meta information 171. A section enclosed by a tag <Stereoscopic_control> indicates the 3D transmission method. In this description example, it is described "side_by_side" and it is indicated that the 3D transmission method is the side by side format. For example, it is described "top_and_bottom" in the case of the top & bottom format, and it is described "mvc" in the case of the MVC format.

Also, a section enclosed by a tag <status3d2d> indicates whether the entirety of the content is 3D or a part thereof is 3D and further indicates whether this starts with 2D or 3D when a part thereof is 3D. In the description example, it is described "partial3d_start3d" and it is indicated that a part of the content is 3D and this starts with 3D. For example, it is described "entire3d" when the entirety of the content is 3D, and it is described "partial3d_start2d" when a part thereof is 3D and this starts with 2D.

Also, a section enclosed by a tag <simul_2d_url> indicates the URL (uniform resource locator) of the distributor of the simultaneous 2D content. Meanwhile, when there is no simultaneous 2D content, the section is not described.

### [Insertion Position of Meta Information (Second Example)]

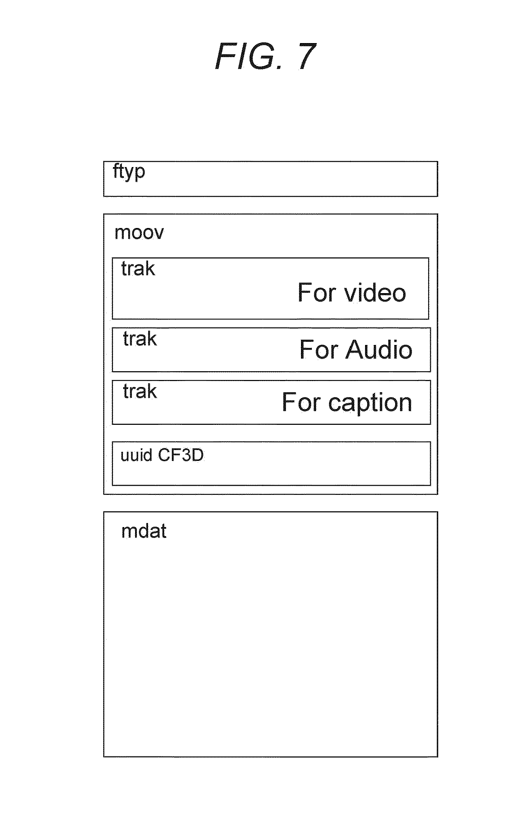

Fig. 7 is an illustrative view of a second example of the insertion position of the meta information. This example illustrates a case in which the meta information is described in the MP4 container. In Fig. 7, user-defined meta data "uuid CF3D" is prepared in a moov container and the meta information is described in the "uuid CF3D".

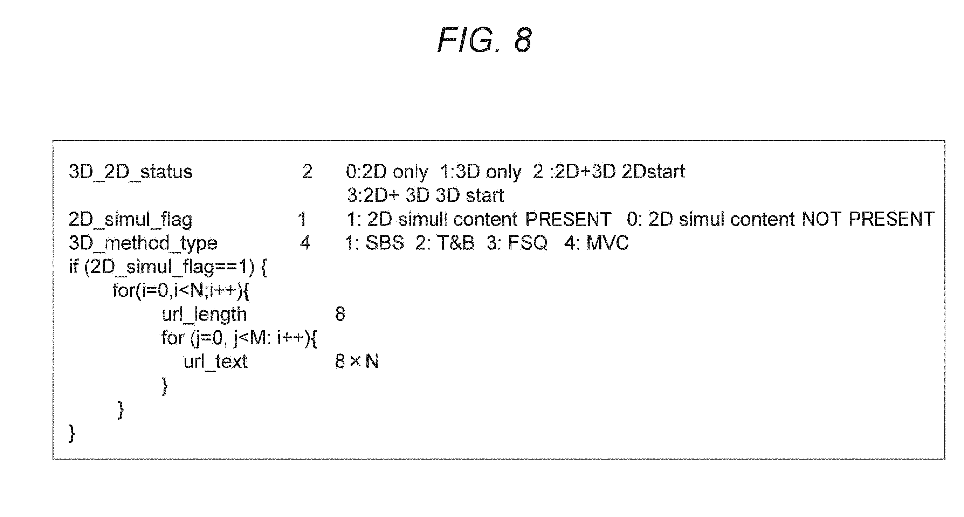

Fig. 8 illustrates the description example of the meta information in the second example of the insertion position of the meta information. This example is the description example in binary when the meta information is described in the MP4 container. Fig. 8 also illustrates a length (bit count) of each region. Meanwhile, it goes without saying that the length (bit count) of each region is not limited to that illustrated in this example.

Initial "3D_2D_status" indicates whether the entirety of the content is 3D or a part thereof is 3D and further indicates whether this starts with 2D or 3D when a part thereof is 3D. When it is described "3D_2D_status=00", it is indicated that there is only the 2D content. Also, when it is described "3D_2D_status=01", it is indicated that the entirety of the content is 3D. Also, when it is described "3D_2D_status=10", it is indicated that a part of the content is 3D and this starts with 2D. Further, when it is described "3D_2D_status=11", it is indicated that a part of the content is 3D and this starts with 3D.

Following "2D_simul_flag" indicates whether there is the simultaneous 2D content. When it is described "2D_Simul_flag=1", it is indicated that there is the simultaneous 2D content. Also, when it is described "2D_Simul_flag=0", it is indicated that there is no simultaneous 2D content.

Following "3D_method_type" indicates the 3D transmission method. When it is described "3D_method_type=0001", the side by side (SBS) format is indicated. Also, when it is described "3D_method_type=0010", the top & bottom (T&B) format is indicated. Also, when it is described "3D_method_type=0011", the frame sequential (FSQ) format is indicated. Further, when it is described "3D_method_type=0100", the MVC format is indicated.

A string after a following if statement is valid in the case of "2D_Simul_flag=1". Information regarding a length of subsequent URL information is described in "url_length" and referenced URL information of the simultaneous 2D content is described in "url_text".

### [Insertion Position of Control Signal]

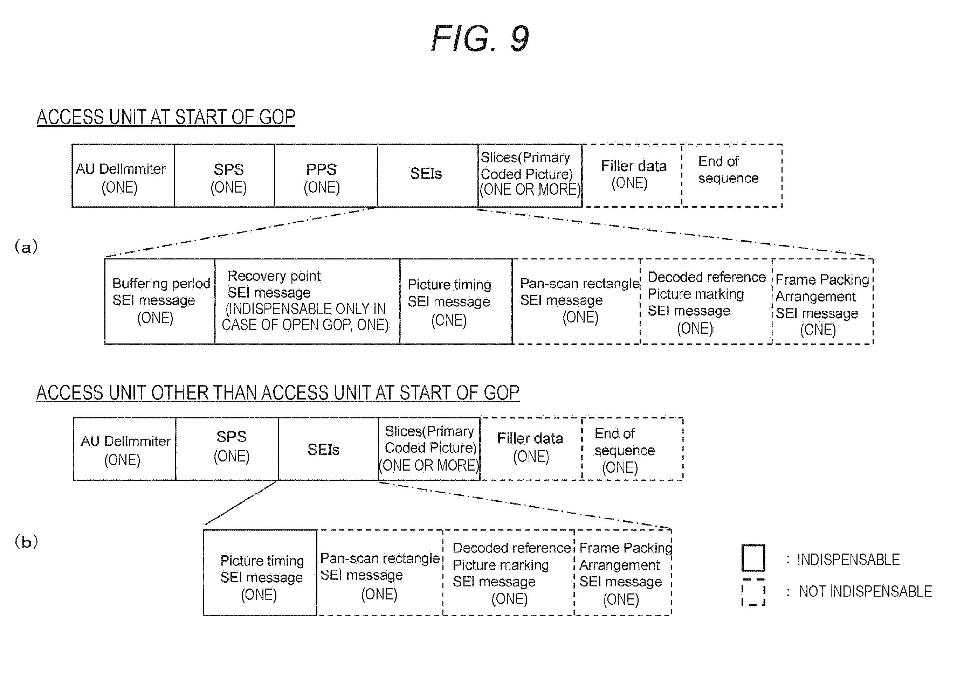

Figs. 9 are illustrative views of the insertion position of the control signal. In this example, the control signal is inserted into the header of each unit, which composes the MPEG-4 AVC video data stream. The control signal includes the signal for identifying 2D and 3D (switching information) when a part of the content is 3D as described above.

As illustrated in Figs. 9, the control signal is inserted as "Frame Packing Arrangement SEI message" in a section "SELs" in the access unit. Meanwhile, Fig. 9(a) illustrates the access unit at a start of a group of pictures (GOP) and Fig. 9(b) illustrates the access unit other than that at the start of the GOP.

### [File Configuration Example of Content Server]

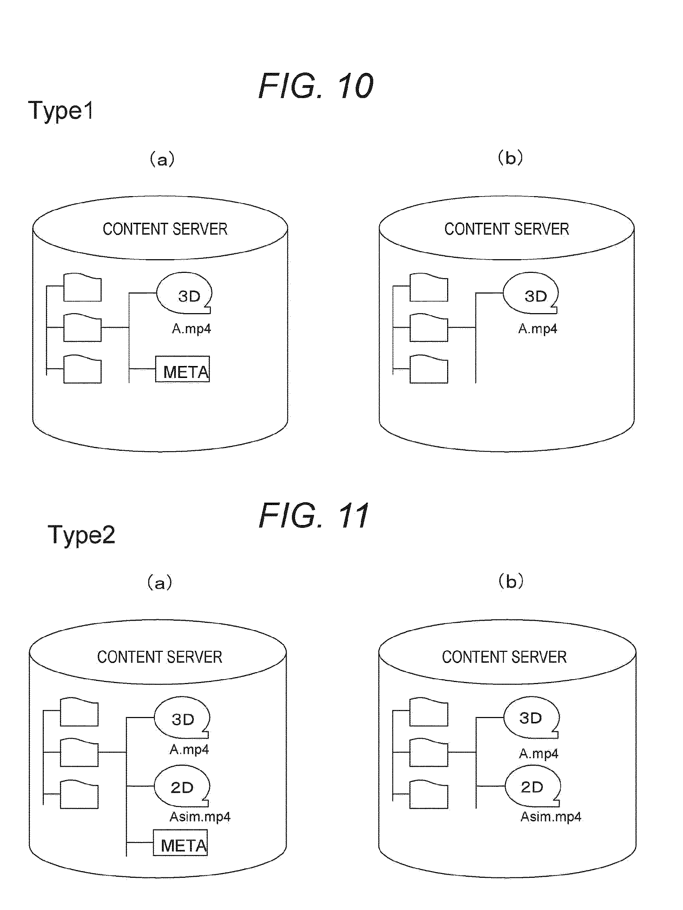

Figs. 10 schematically illustrate file configuration examples of the content server in the above-described "type 1" transmission mode. Fig. 10(a) illustrates a case in which the insertion position of the meta information is the first example. In this case, the content server includes the meta file in which the meta information is inserted in addition to the file the entirety of which is the 3D content. On the other hand, Fig. 10(b) illustrates a case in which the insertion position of the meta information is the second example. In this case, although the content server includes the file the entirety of which is the 3D content into which the meta information is inserted, this does not include the meta file into which the meta information is inserted.

Also, Figs. 11 schematically illustrate the file configuration examples of the content server in the above-described "type 2" transmission mode. Fig. 11(a) illustrates a case in which the insertion position of the meta information is the first example. In this case, the content server includes the meta file into which the meta information is inserted in addition to the file the entirety of which is the 3D content and the file of the simultaneous 2D content. On the other hand, Fig. 11(b) illustrates a case in which the insertion position of the meta information is the second example. In this case, although the content server includes the file the entirety of which is the 3D content into which the meta information is inserted and the file of the simultaneous 2D content, this does not include the meta file into which the meta information is inserted.

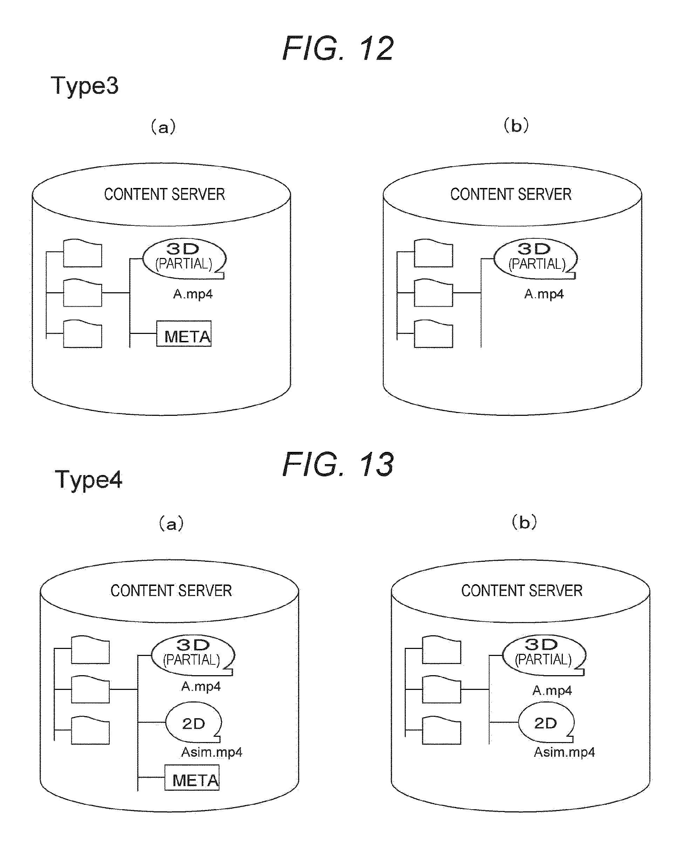

Also, Figs. 12 schematically illustrate the file configuration examples of the content server in the above-described "type 3" transmission mode. Fig. 12(a) illustrates a case in which the insertion position of the meta information is the first example. In this case, the content server includes the meta file into which the meta information is inserted in addition to the file a part of which is the 3D content. On the other hand, Fig. 12(b) illustrates a case in which the insertion position of the meta information is the second example. In this case, although the content server includes the file a part of which is the 3D content into which the meta information is inserted, this does not include the meta file into which the meta information is inserted.

Also, Figs. 13 schematically illustrate the file configuration examples of the content server in the above-described "type 4" transmission mode. Fig. 13(a) illustrates a case in which the insertion position of the meta information is the first example. In this case, the content server includes the meta file into which the meta information is inserted in addition to the file a part of which is the 3D content and the file of the simultaneous 2D content. On the other hand, Fig. 13(b) illustrates a case in which the insertion position of the meta information is the second example. In this case, although the content server includes the file a part of which is the 3D content into which the meta information is inserted and the file of the simultaneous 2D content, this does not include the meta file into which the meta information is inserted.

### [Configuration of Content Server]

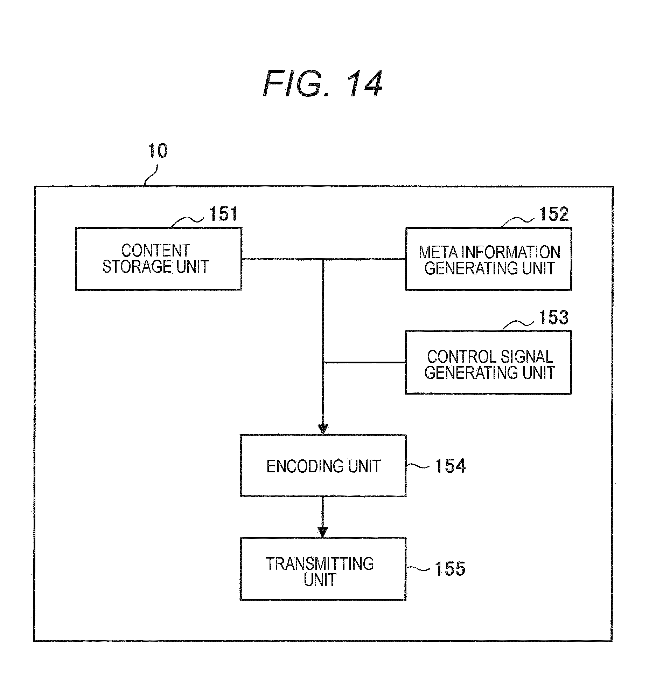

Fig. 14 illustrates a configuration example of a content server 10. The content server 10 includes a content storage unit 151, a meta information generating unit 152, a control signal generating unit 153, an encoding unit 154, and a transmitting unit 155.

The content storage unit 151 includes a hard disc and the like, for example, and stores data of the content. The meta information generating unit 152 generates the meta information, which is the information regarding the entirety of the content. The meta information includes content information such as the information indicating whether the entirety of the content is 3D or a part thereof is 3D, the information indicating whether this starts with 2D or 3D when a part thereof is 3D, and further the information for identifying the 3D transmission method as described above (refer to Figs. 6 and 8).

The control signal generating unit 153 generates the control signal for directly controlling the video stream and the audio stream (AV stream). The control signal includes the signal for identifying 2D and 3D when a part of the content is 3D, that is, the switching information regarding the switching timing between 2D and 3D as described above.

The encoding unit 154 encodes the data of the content stored in the content storage unit 151, the meta information generated by the meta information generating unit 152, and the control signal generated by the control signal generating unit 153 by a predetermined encoding system. The transmitting unit 155 distributes the data encoded by the encoding unit 154 to the receiver through the network.

### [Configuration of Receiver]

Next, a configuration example of a receiver 20, which receives the content of the types 1 to 4 distributed from the above-described content server 10 is described. The receiver 20 may be a television receiver, which may be connected to the Internet, a personal computer, which may be connected to the Internet, a portable information terminal such as a portable game player and a portable music player and the like, for example.

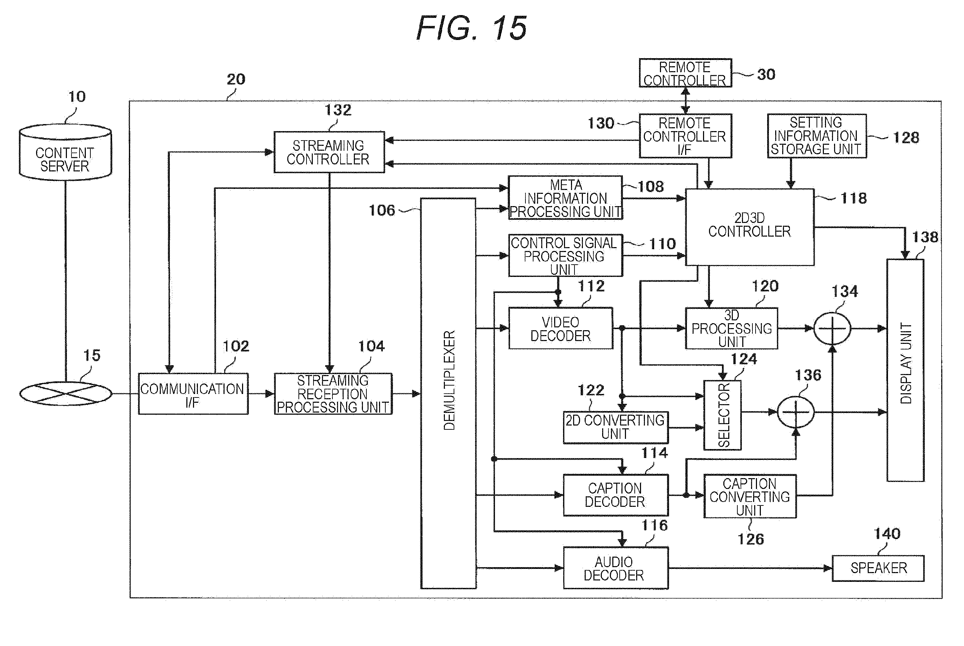

Fig. 15 illustrates the configuration example of the receiver 20. The receiver 20 includes a communication I/F 102, a streaming reception processing unit 104, a demultiplexer 106, a meta information processing unit 108, a control signal processing unit 110, a video decoder 112, a caption decoder 114, and an audio decoder 116. Also, the receiver 20 includes a 2D3D controller 118, a 3D processing unit 120, a 2D converting unit 122, a selector 124, a caption converting unit 126, and a setting information storage unit 128. Also, the receiver 20 includes a remote controller I/F 130, a streaming controller 132, adders 134 and 136, a display unit 138, and a speaker 140.

The communication I/F 102 receives the stream transmitted from the content server 10 through a network 15 such as the Internet. The stream received by the communication I/F 102 is transmitted to the streaming reception processing unit 104.

The streaming reception processing unit 104 executes a predetermined reception process such as error correction and stream synchronization to the stream received by the communication I/F 102. The stream to which the above-described predetermined reception process such as the error correction and the stream synchronization is executed by the streaming reception processing unit 104 is transmitted to the demultiplexer 106. The stream, which becomes a target of the reception process by the streaming reception processing unit 104, is specified by the streaming controller 132.

The demultiplexer 106 separates the stream to which the predetermined reception process is executed by the streaming reception processing unit 104 into the video, audio and the like. The demultiplexer 106 separates the stream into the meta data, control data, video data, audio data, and caption data. The demultiplexer 106 supplies the meta data separated from the stream to the meta information processing unit 108.

Also, the demultiplexer 106 supplies the control signal separated from the stream to the control signal processing unit 110. Also, the demultiplexer 106 supplies the video data separated from the stream to the video decoder 112. Also, the demultiplexer 106 supplies the caption data separated from the stream to the caption decoder 114. Further, the demultiplexer 106 supplies the audio data separated from the stream to the audio decoder 116.

The meta information processing unit 108 receives the meta information transmitted from the communication I/F 102 or the demultiplexer 106 to execute analysis of the meta data. Through the analysis of the meta information by the meta information processing unit 108, it is possible to know whether the content transmitted from the content server 10 is 2D or 3D or which transmission method is used when the content is 3D. An analysis result of the meta information by the meta information processing unit 108 is transmitted to the 2D3D controller 118.

The control signal processing unit 110 receives the control signal transmitted from the demultiplexer 106 to execute analysis of the control signal. Through the analysis of the control signal by the control signal processing unit 110, it is possible to grasp the switching timing of the content transmitted from the content server 10 from 2D to 3D or from 3D to 2D. An analysis result of the control signal by the control signal processing unit 110 is transmitted to the 2D3D controller 118.

The video decoder 112 is supplied with encoded video data separated by the demultiplexer 106 and executes a predetermined decoding process to the supplied encoded video data. The caption decoder 114 is supplied with encoded caption data separated by the demultiplexer 106 and executes a predetermined decoding process to the supplied caption data. The audio decoder 116 is supplied with encoded audio data separated by the demultiplexer 106 and executes a predetermined decoding process to the supplied encoded audio data.

The 2D3D controller 118 receives the analysis result of the meta information from the meta information processing unit 108 and the analysis result of the control signal from the control signal processing unit 110 and controls the switch from a 2D video signal for displaying the 2D video to a 3D video signal for displaying the 3D video or an opposite switch by using the analysis results. The 2D3D controller 118 confirms a 3D display support state of the receiver 20 from setting information of the receiver 20 stored in the setting information storage unit 128 and executes control corresponding to setting of the receiver 20.

The 3D processing unit 120 executes various pieces of signal processing to the video signal supplied from the video decoder 112 for displaying as the 3D video based on an instruction from the 2D3D controller 118.
The various pieces of signal processing by the 3D signal processing unit 120 include rearrangement of the video data according to the 3D transmission method and the like, for example. The video signal to which the signal processing is performed by the 3D processing unit 120 is transmitted to the adder 134.

The 2D converting unit 122 executes a conversion process for generating the 2D video from the 3D video to the video signal supplied from the video decoder 112. The conversion process by the 2D converting unit 122 is executed when the content is viewed not in 3D but in 2D in a case in which the content the entirety of which is created in 3D as the "type 1" is transmitted from the content server 10, for example. The video signal to which the conversion process is performed by the 2D converting unit 122 is transmitted to the selector 124.

The selector 124 selects either of the video signal supplied from the video decoder 112 and the video signal to which the conversion process is performed by the 2D converting unit 122 to output. Selection by the selector 124 is performed by the instruction of the 2D3D controller 118. The video signal selected by the selector 124 to be output is transmitted to the adder 136.

The caption converting unit 126 receives the caption data decoded by the caption decoder 114 and executes a 3D conversion process for superimposing the same on the 3D video. Since the caption converting unit 126 executes the 3D conversion process to the caption data, not only the video but also the caption may be stereoscopically displayed.

The setting information storage unit 128 stores the information regarding the receiver 20. The information regarding the receiver 20 stored in the setting information storage unit 128 includes information of whether this supports display of the 3D video, information of a display format of the supported 3D video when this supports the display of the 3D video and the like, for example. The information regarding the receiver 20 stored in the setting information storage unit 128 is read from the setting information storage unit 128 at the time of various controls by the 2D3D controller 118 and is used in the various controls by the 2D3D controller 118.

The remote controller I/F 130 receives a signal from the remote controller (remote) 30. The remote controller I/F 130 receives the signal from the remote controller 30 by infrared light or by air. The remote controller I/F 130 transmits an instruction to the 2D3D controller 118 and the streaming controller 132 according to the signal from the remote controller 30.

For example, when the signal from the remote controller 30 provides the instruction to switch from the 3D video to the 2D video, the remote controller I/F 130 instructs the 2D3D controller 118 to switch from the 3D video to the 2D video and the 2D3D controller 118 starts switching control from the 3D video to the 2D video based on the instruction. Also, for example, when the signal from the remote controller 30 provides the instruction to stop or pause the reproduction and to reproduce at a variable speed, the remote controller I/F 130 instructs the streaming controller 132 to perform the operation instructed by the remote controller 30.

The streaming controller 132 executes reproduction control such as start, stop, and pause of the reproduction and variable speed reproduction according to the instruction from the 2D3D controller 118 or the remote controller I/F 130. The streaming controller 132 also executes the control to start up the reproduction of a specific content. When the streaming controller 132 receives an instruction to start up the reproduction of the specific content, this instructs the communication I/F 102 to access/receive the specific content. Also, when the streaming controller 132 receives the instruction to start up the reproduction of the specific content, this instructs the streaming reception processing unit 104 to execute the predetermined reception process to the content, which is a target of the reproduction start-up.

The adder 134 superimposes the caption data to which the 3D conversion process is executed by the caption converting unit 126 on the 3D video signal output from the 3D processing unit 120 to output to the display unit 138. Also, the adder 136 superimposes the caption data decoded by the caption decoder 114 on the 2D video signal output from the selector 124 to output to the display unit 138.

The display unit 138 selects either of the 2D signal and 3D signal transmitted from the adders 134 and 136, respectively, by the instruction from the 2D3D controller 118 to display the image. Although a liquid crystal panel may be used as the display unit 138, for example, it is also possible to use the display panel other than the liquid crystal panel in the present invention. The speaker 140 outputs the audio by using an audio signal decoded by the audio decoder 116.

### [Operation of Receiver]

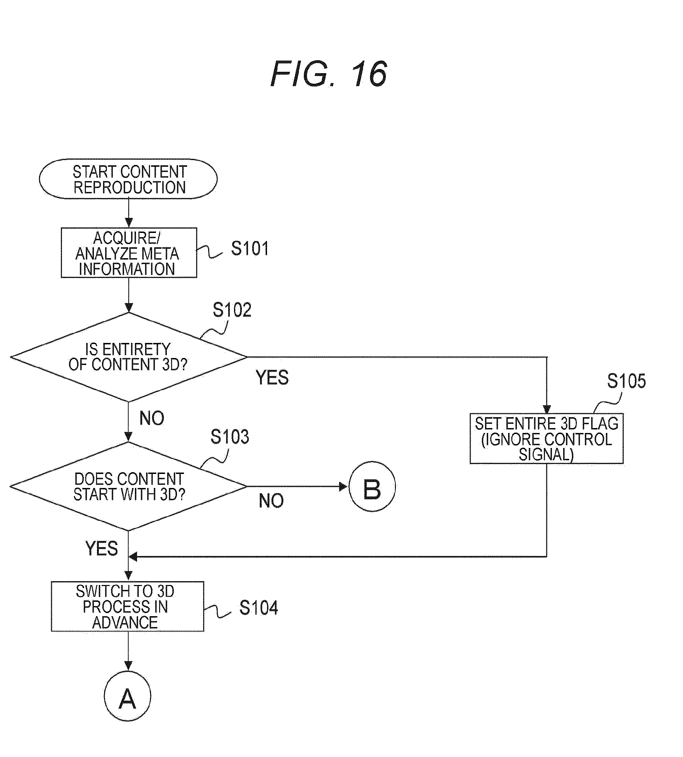

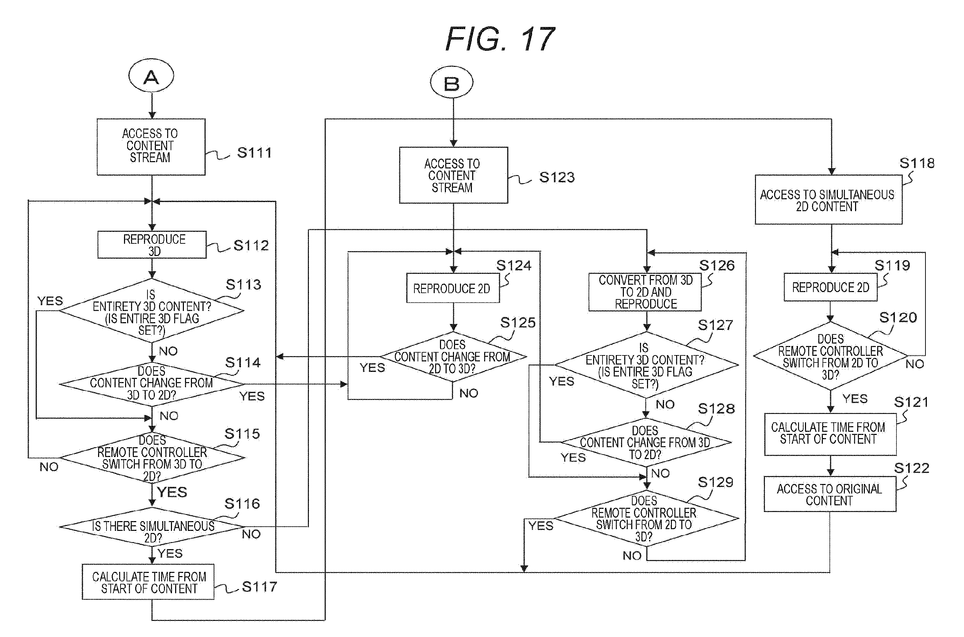

Next, operation of the receiver 20 is described with reference to flowcharts in Figs. 16 and 17. When the reproduction of the content is started, the receiver 20 (meta information processing unit 108) acquires the meta information and analyzes the same at a step S101. Next, the receiver 20 (2D3D controller 118) judges whether the entirety of the content is 3D based on the analysis result.

When the entirety of the content is not 3D but a part thereof is 3D, the receiver 20 (2D3D controller 118) further judges whether the content starts with 3D based on the analysis result of the meta information at a step S103. When the content starts with 3D, the receiver 20 (2D3D controller 118) prepares a 3D signal processing state of the 3D processing unit 120 and the like in advance at a step S104.

When the entirety of the content is 3D at step a S102, the receiver 20 (2D3D controller 118) sets an entire 3D flag at a step S105 and is put into a state in which the control signal is ignored. In this state, it is not required that the receiver 20 (2D3D controller 118) monitor the control signal. Thereafter, the receiver 20 (2D3D controller 118) goes to the process at the step S104 to prepare the 3D signal processing state of the 3D processing unit 120 and the like in advance.

After the 3D signal processing state of the 3D processing unit 120 and the like is prepared in advance at the above-described step S104, the receiver 20 (streaming controller 132) accesses the content of the content server 10 at a step S111. When the content is transmitted from the content server 10 to the receiver 20, the receiver 20 reproduces the 3D video at a step S112. In this case, since the 3D signal processing state of the 3D processing unit 120 and the like is prepared in advance at the above-described step S104, time required for reproducing and displaying the content may be shortened.

Next, the receiver 20 (2D3D controller 118) judges whether the entirety of the reproduced content is 3D, that is, whether the entire 3D flag is set at a step S113. When the entire 3D flag is not set, the receiver 20 (2D3D controller 118) judges whether the reproduced content changes from 3D to 2D based on the analysis result of the control signal by the control signal processing unit 110 at a step S114.

When the reproduced content does not change from 3D to 2D, the receiver 20 goes to a process at a step S115. When the entire 3D flag is set at the step S113 also, the receiver 20 immediately goes to the process at the step S115. At the step S115, the receiver 20 judges whether the user switches to the reproduction of the 2D video by the remote controller 30 and the like. When the user does not switch to the reproduction of the 2D video, this returns to the step S112 to continuously reproduce the 3D video.

When the user switches to the reproduction of the 2D video by the remote controller 30 and the like at the step S115, the receiver 20 (2D3D controller 118) judges whether there is the simultaneous 2D content based on the analysis result of the meta information by the meta information processing unit 108 at a step S116. When there is the simultaneous 2D content, the receiver 20 (2D3D controller 118) calculates time from the start of the received/reproduced content at a step S117 and accesses the simultaneous 2D content at a step S118. When the content is transmitted from the content server 10 to the receiver 20, the receiver 20 reproduces the 2D video at a step S119.

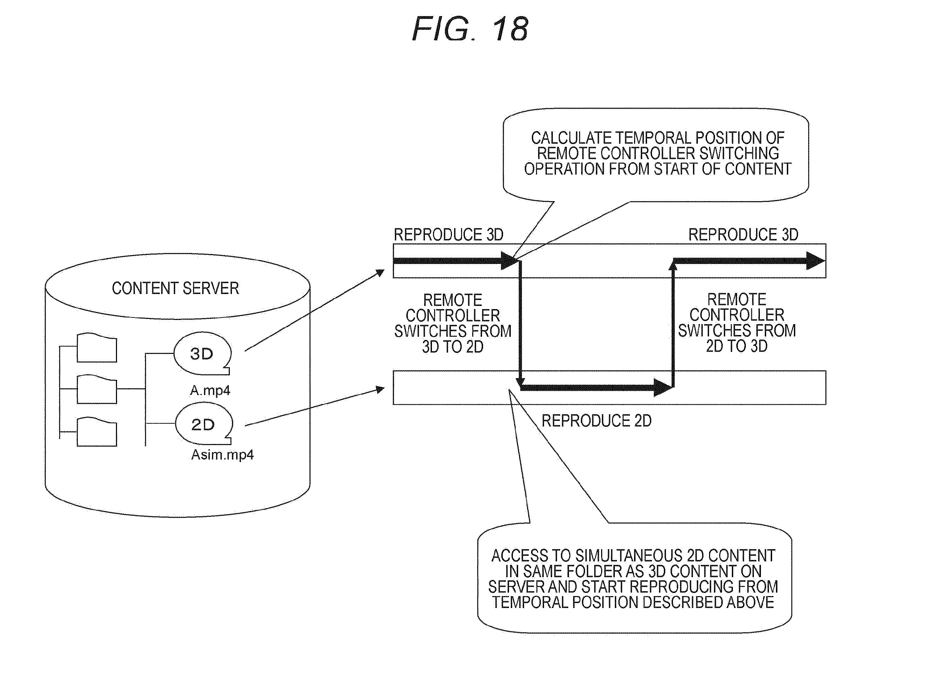

Fig. 18 is an illustrative view schematically illustrating a content switching process in a case in which the simultaneous 2D content is present in the received content. The simultaneous 2D content (content of which file name is Asim.mp4) is stored in the same folder as the 3D content (content of which file name is A.mp4), for example, in the content server 10.

The receiver 20 calculates a temporal position of switching operation by the remote controller 30 and the like by the user from the start of the content when it is switched from the 3D content to the simultaneous 2D content. Then, the receiver 20 accesses the simultaneous 2D content stored in the same folder as the 3D content in the content server 10 and starts reproducing from the calculated temporal position. In this manner, by switching from the 3D content to the simultaneous 2D content, the receiver 20 may seamlessly reproduce the content.

Next, the receiver 20 (2D3D controller 118) judges whether the user switches to the reproduction of the 3D video by the remote controller 30 and the like at a step S120. When the user does not switch to the reproduction of the 3D video, this returns to the step S119 to continuously reproduce the 2D video.

When the user switches to the reproduction of the 3D video by the remote controller 30 and the like at the step S115, the receiver 20 (2D3D controller 118) calculates the time from the start of the received/reproduced content at a step S121 and accesses an original content at a step S122. When the content is transmitted from the content server 10 to the receiver 20, the receiver 20 reproduces the 3D video at the step S112.

The switch from the simultaneous 2D content to the 3D content is described with reference to Fig. 18. The receiver 20 calculates the temporal position of the switching operation by the remote controller 30 and the like by the user from the start of the content when it is switched from the simultaneous 2D content to the 3D content. Then, the receiver 20 accesses the 3D content stored in the same folder as the simultaneous 2D content in the content server 10 and starts reproducing from the calculated temporal position. In this manner, by switching from the simultaneous 2D content to the 3D content, the receiver 20 may seamlessly reproduce the content.

Also, when the content starts with 2D at the above-described step S103, the receiver 20 (streaming controller 132) accesses the content of the content server 10 at a step S123. When the content is transmitted from the content server 10 to the receiver 20, the receiver 20 reproduces the 2D video at a step S124.

Next, the receiver 20 (2D3D controller 118) judges whether the reproduced content changes from 2D to 3D based on the analysis result of the control signal by the control signal processing unit 110 at a step S125. When the reproduced content does not change from 2D to 3D, the receiver 20 returns to the step S124 to continuously reproduce the 2D video. On the other hand, when the reproduced content changes from 2D to 3D, the receiver 20 returns to the step S112 to reproduce the 3D video.

Also, when there is no simultaneous 2D content at the above-described step S116, the receiver 20 converts the 3D video to the 2D video and reproduces the same at a step S126. Then, the receiver 20 (2D3D controller 118) judges whether the entirety of the reproduced content is 3D, that is, whether the entire 3D flag is set at a step S127. When the entire 3D flag is not set, the receiver 20 (2D3D controller 118) judges whether the reproduced content changes from 3D to 2D based on the analysis result of the control signal by the control signal processing unit 110 at a step S128.

When the reproduced content changes from 3D to 2D, the receiver 20 returns to the step S124 to reproduce the 2D video. When the reproduced content does not change from 3D to 2D, the receiver 20 goes to a process at a step S129. When the entire 3D flag is set at the step S127 also, the receiver 20 immediately goes to the process at the step S129.

At the step S129, the receiver 20 judges whether the user switches to the reproduction of the 3D video by the remote controller 30 and the like. When the user does not switch to the reproduction of the 3D video, this returns to the step S126 to continuously reproduce the 2D video. At the step S129, when the user switches to the reproduction of the 3D video by the remote controller 30 and the like, the receiver 20 returns to the step S112 to reproduce the 3D image.

The receiver 20 continues the above-described operation to the end of the content. The receiver 20 may switch the reproduction of the 3D video and the reproduction of the 2D video based on the meta information and control signal transmitted from the content server 10.

As described above, according to one embodiment of the present invention, the meta information and control signal regarding 3D are also transmitted together with the content from the content server 10 to the receiver 20. The meta information includes the information further indicating whether the entirety of the content is 3D or a part thereof is 3D, the information indicating whether this starts with 2D or 3D when a part thereof is 3D, and the information for identifying the 3D transmission method when the content is 3D. Also, the control signal includes the signal for identifying 2D and 3D when a part of the content is 3D. Therefore, when the content of the transmission mode of any of the types 1 to 4 is transmitted, the receiver 20 may process the same in an excellent manner.

Also, according to one embodiment, the receiver 20 may know whether the entirety of the content is 3D or a part thereof is 3D and whether this starts with 2D or 3D when a part thereof is 3D by the meta information before the reproduction of the content. Therefore, the receiver 20 may prepare the 3D signal processing state of the 3D processing unit 120 and the like in advance when the entirety of the content is 3D or when a part thereof is 3D and this starts with 3D, for example. Therefore, the time required for reproducing/displaying the content may be shortened.

### <2. Variation>

Meanwhile, although not described above, a series of processes illustrated in the flowcharts in Figs. 16 and 17 may be executed by hardware or by software. When a series of processes are executed by the software, a program, which composes the software, is installed from a program recording medium into a computer embedded in dedicated hardware or a general-purpose personal computer, for example, capable of executing various functions by installing various programs.

Communication may of course be wireless communication and wired communication and may be communication in which the wireless communication and the wired communication are mixed, that is, the communication in which the wireless communication is performed in a certain section and the wired communication is performed in another section. Further, it is also possible that the communication from a certain device to another device is performed by the wired communication and the communication from another device to a certain device is performed by the wireless communication.

Although a preferred embodiment of the present invention is described above in detail with reference to the attached drawings, the present invention is not limited to such an example. It is obvious that one of ordinary skill in the field of the technology to which the present invention belongs may conceive of various variations and corrections within the technical idea recited in claims and it is understood that they naturally belong to the technical scope of the present invention.

### INDUSTRIAL APPLICABILITY

The present invention is applicable to a signal transmitting method, a signal transmitting device, and a signal receiving device, and is especially applicable to the signal transmitting method, the signal transmitting device, and the signal receiving device in a case in which the 3D video is distributed by using a broadband network.

### REFERENCE SIGNS LIST

| | |
|---|---|
| 10 | Content server |
| 15 | Network |
| 20 | Receiver |
| 30 | Remote controller |
| 102 | Communication I/F |
| 104 | Streaming reception processing unit |
| 106 | Demultiplexer |
| 108 | Meta information processing unit |
| 110 | Control data processing unit |
| 112 | Video decoder |
| 114 | Caption decoder |
| 116 | Audio decoder |
| 118 | 2D3D controller |
| 120 | 3D processing unit |
| 122 | 2D converting unit |
| 124 | Selector |
| 126 | Caption converting unit |
| 128 | Setting information storage unit |
| 130 | Remote controller I/F |
| 132 | Streaming controller |
| 134, 136 | Adder |
| 138 | Display unit |
| 140 | Speaker |
| 151 | Content storage unit |
| 152 | Meta information generating unit |
| 153 | Control data generating unit |
| 154 | Encoding unit |
| 155 | Transmitting unit |
| 170 | Meta file |

## Claims

1. A signal transmitting method, comprising:
when a stereoscopic image display section for displaying a stereoscopic image is included in at least a part of content distributed through a network, transmitting content information, together with the content, indicating whether the entirety of the content is the stereoscopic image display section or a part of the content is the stereoscopic image display section and further indicating whether a starting display section is the stereoscopic image display section or a two-dimensional image display section when a part of the content is the stereoscopic image display section.

2. The signal transmitting method according to claim 1, comprising describing the content information in information distributed before reproduction of the content to transmit the content information.

3. The signal transmitting method according to claim 1, comprising describing the content information in the content to transmit content information.

4. The signal transmitting method according to claim 3, comprising describing the content information in a moov container of an MP4 container to transmit the content information.

5. The signal transmitting method according to claim 1, comprising transmitting switching information regarding switching timing between the stereoscopic image display section and the two-dimensional image display section together with the content when a part of the content is the stereoscopic image display section.

6. The signal transmitting method according to claim 5, comprising describing the switching information in the content to transmit the switching information.

7. A signal transmitting device, comprising:
a transmitting unit which transmits, through a network, content in at least a part of which a stereoscopic image display section for displaying a stereoscopic image is included, wherein
the transmitting unit transmits, together with the content, content information indicating whether the entirety of the content is the stereoscopic image display section or a part of the content is the stereoscopic image display section and further indicating whether a starting display section is the stereoscopic image display section or a two-dimensional image display section when a part of the content is the stereoscopic image display section.

8. A signal transmitting device, comprising:
a content outputting unit which outputs content in at least a part of which a stereoscopic image display section for displaying a stereoscopic image is included;
a content information generating unit which generates content information indicating whether the entirety of the content is the stereoscopic image display section or a part of the content is the stereoscopic image display section and further indicating whether a starting display section is the stereoscopic image display section or a two-dimensional image display section when a part of the content is the stereoscopic image display section; and
a transmitting unit which transmits the content information generated by the content information generating unit through a network together with the content output from the content outputting unit.

9. The signal transmitting device according to claim 8, further comprising:
a switching information generating unit which generates switching information regarding switching timing between the stereoscopic image display section and the two-dimensional image display section when a part of the content is the stereoscopic image display section, wherein
the transmitting unit further transmits the switching information generated by the switching information generating unit together with the content.

10. A signal receiving device, comprising:
a receiving unit which receives, through a network, content in at least a part of which a stereoscopic image display section for displaying a stereoscopic image is included and content information indicating whether the entirety of the content is the stereoscopic image display section or a part of the content is the stereoscopic image display section and further indicating whether a starting display section is the stereoscopic image display section or a two-dimensional image display section when a part of the content is the stereoscopic image display section;
a content processing unit which performs a reproduction process to the content received by the receiving unit; and
a controller which controls the content processing unit based on the content information received by the receiving unit before the content processing unit starts the reproduction process.

11. The signal receiving device according to claim 10, wherein
the receiving unit further receives switching information regarding switching timing between the stereoscopic image display section and the two-dimensional image display section when a part of the content is the stereoscopic image display section, and
the controller switches the process of the content processing unit based on the switching information received by the receiving unit when a part of the content is the stereoscopic image display section.
